# EUROPEAN PATENT SPECIFICATION

(11) **EP 4 417 919 B1**
(45) Date of publication and mention of the grant of the patent: **04.06.2025**
(21) Application number: 23217509.1
(22) Date of filing: 18.12.2023
(51) Int. Cl.: F26B 25/00, F26B 21/02, F26B 21/04, F26B 23/00

(54) **ELECTRODE MANUFACTURING FACILITY AND ELECTRODE MANUFACTURING METHOD**
ELEKTRODENHERSTELLUNGSANLAGE UND ELEKTRODENHERSTELLUNGSVERFAHREN
INSTALLATION DE FABRICATION D'ÉLECTRODE ET PROCÉDÉ DE FABRICATION D'ÉLECTRODE

(30) Priority: 20.02.2023 JP 2023024234
(43) Date of publication of application: 21.08.2024
(73) Proprietor: Prime Planet Energy & Solutions, Inc., Chuo-ku Tokyo 103-0022 (JP)
(72) Inventor: HIGASHIO, Naoto, Tokyo, 103-0022 (JP)
(74) Representative: Kuhnen & Wacker Patent- und Rechtsanwaltsbüro PartG mbB

(56) References cited:
- JP-A- 2008 114 203
- JP-A- 2012 097 917
- JP-B2- 5 829 498
- US-B2- 10 184 717

## Description

### BACKGROUND

The present invention relates to an electrode manufacturing facility and a method of manufacturing electrodes.

JP 2012-097917 A discloses a dryer apparatus that dries a substrate material having a slurry coating film while conveying the substrate material. The dryer apparatus disclosed in JP 2012-097917 A is equipped with a drying furnace for drying the coating film on the substrate material and an exhaust port for expelling the gas inside the drying furnace out of the drying furnace. The drying furnace includes a plurality of dry zones having different dry atmospheres from each other along a conveying direction of the substrate material. The exhaust port of the drying furnace is disposed downstream of the most upstream one of the plurality of dry zones. With such a dryer apparatus, the solvent evaporated from the slurry coating film is not exhausted in the most upstream dry zone (that is, the initial stage of drying), so the concentration of the solvent gas inside the drying furnace increases. When the concentration of the solvent gas inside the drying furnace increases, it approaches the saturation vapor pressure, so the evaporation of the solvent is inhibited. It is stated that this inhibits rapid drying of the slurry coating film at the initial stage of drying, so it is possible to prevent the migration that occurs due to rapid drying of the slurry coating film at the initial stage of drying.

JP 2008-114203 A discloses a method of collecting an inorganic solvent. In cases where an organic solvent is used, the organic solvent is contained in an exhaust gas in the drying step, so it is necessary to collect the organic solvent. Methods of collecting an organic solvent include a dry type method and a wet type method. In a dry type process, for example, the exhaust gas in the drying step is cooled with a cooling water or the like by an indirect heat exchanger to condense and collect a solvent component within the exhaust gas. A wet type process involves a gas absorption method using water as an absorbent. In a wet type process, the exhaust gas is introduced into an absorption tower in which water is sprayed, to thereby cause a solvent component in the exhaust gas to be absorbed into water. The publication states that in the wet type process, the lower the temperature, the higher the efficiency in absorbing the solvent component. It is stated that, for that reason, the exhaust gas to be introduced into the absorption tower should preferably be cooled in advance and brought into gas-liquid contact with a large amount of water.

### SUMMARY

As demands for lithium-ion secondary batteries are expected to increase with the shift to EVs in vehicle industries, massive cost increases are expected in mass production of lithium-ion secondary batteries. In particular, it is considered desirable to lower the energy required in the drying step in manufacturing electrodes to reduce manufacturing costs. The present inventors believe that, for a method of collecting an organic solvent from the exhaust gas after the drying, a wet type process, which causes water to absorb the organic solvent, is advantageous over a dry type process, in which the exhaust gas needs to be cooled to a level at which the organic solvent condenses. Accordingly, the present inventors intend to reduce the manufacturing costs including the collecting of an organic solvent with a wet type process.

According to the present disclosure, an electrode manufacturing facility includes a dryer, a solvent collection device, a first pipe, an outside air inlet pipe, a heat exchanger, and a second pipe.

The dryer includes a drying furnace, a heater, and a conveyor device. Here, the heater is a device that heats the air supplied through the outside air inlet pipe and supplies the air to the drying furnace. The conveyor device is a device that conveys a sheet-shaped current collector coated with a mixture slurry in which electrode active material particles are dispersed in an organic solvent, along a predetermined conveyance passage in the drying furnace.

The solvent collection device is a device that causes the organic solvent contained in an exhaust gas expelled from the dryer to dissolve into water to collect the organic solvent. The first pipe is a pipe that sends the exhaust gas expelled from the dryer to the solvent collection device. The outside air inlet pipe is a pipe that introduces outside air and sends the outside air to the dryer. The heat exchanger is a device configured to exchange heat between the first pipe and the outside air inlet pipe. The second pipe is a pipe that is connected to a pipe to which the exhaust gas after having passed through the solvent collection device is expelled and to a portion of the outside air inlet pipe that is upstream of the heat exchanger, and sends at least a portion of the exhaust gas after having passed through the solvent collection device to the outside air inlet pipe.

In the above-described electrode manufacturing facility, the exhaust gas after having passed through the solvent collection device is mixed with the outside air in the outside air inlet pipe and further heat exchanged with the exhaust gas from the dryer by the heat exchanger. This allows the temperature of the outside air introduced to the dryer to be raised in advance, and lowers the energy required by the heater of the dryer.

In this case, the outside air inlet pipe, which sends the outside air to the dryer, may further include a heating device disposed downstream of the heat exchanger. In another embodiment of the electrode manufacturing facility, the outside air inlet pipe, which sends the outside air to the dryer, may be provided with a heating device disposed downstream of the heat exchanger without providing the second pipe.

According to the present disclosure, a method of manufacturing electrodes includes: a drying step of drying a sheet-shaped current collector coated with a mixture slurry in which electrode active material particles are dispersed in an organic solvent; and a solvent collecting step of collecting the organic solvent by spraying water to an exhaust gas produced in the drying step and causing the organic solvent contained in the exhaust gas to dissolve into the water. In the drying step, a portion of the exhaust gas after having been sprayed water in the solvent collecting step is mixed with outside air, heat-exchanged with the exhaust gas produced in the drying step, and introduced into the dryer. In this case, in the drying step, it is also possible that a gas in which outside air is mixed with a portion of the exhaust gas after having been sprayed with water in the solvent collecting step may be heat-exchanged with the exhaust gas produced in the drying step, thereafter further heated, and then introduced into the dryer.

In another embodiment, the method of manufacturing electrodes includes: a drying step of drying a sheet-shaped current collector coated with a mixture slurry in which electrode active material particles are dispersed in an organic solvent; and a solvent collecting step of collecting the organic solvent by spraying water to an exhaust gas produced in the drying step and causing the organic solvent contained in the exhaust gas to dissolve into the water. in the drying step, outside air is heat-exchanged with the exhaust gas produced in the drying step, further heated, and thereafter introduced into a dryer.

The electrode manufacturing methods as described above are able to raise the temperature of the outside air introduced to the dryer in advance and lower the energy required by the heater of the dryer.

### BRIEF DESCRIPTION OF THE DRAWINGS

Fig. 1 is a configuration diagram illustrating the configuration of an electrode manufacturing facility 10.
Fig. 2 is a schematic view of a solvent collection device 13.

### DETAILED DESCRIPTION

Hereinbelow, the present disclosure will be described in detail. Unless otherwise stated, the present disclosure is not intended to limit the invention as set forth in the appended claims. The drawings are depicted schematically and do not necessarily accurately depict actual objects. The features and components that exhibit the same effects are designated by the same reference symbols as appropriate, and the description thereof will not be repeated.

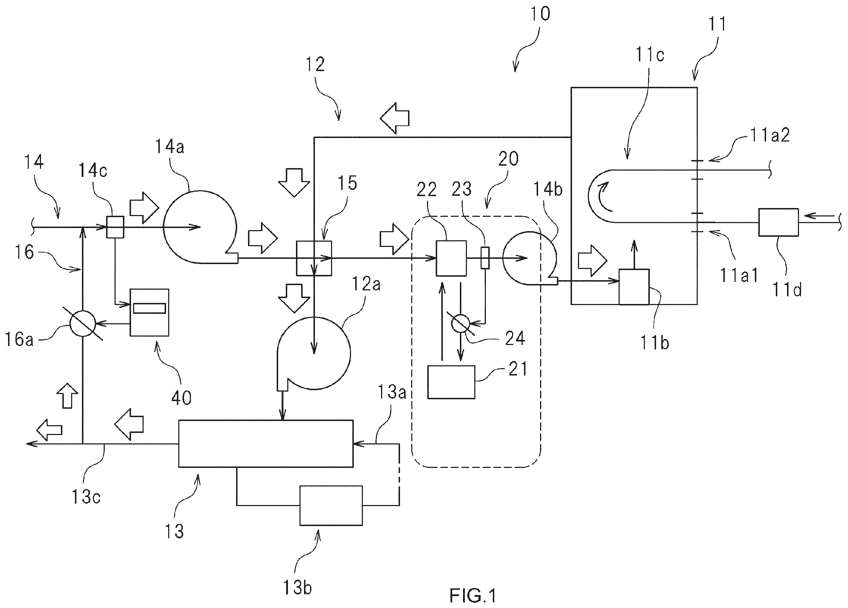

Fig. 1 is a configuration diagram illustrating the configuration of an electrode manufacturing facility 10. The electrode manufacturing facility 10 is used as, for example, manufacturing equipment for manufacturing electrode sheets for use in electricity storage devices, such as lithium-ion secondary batteries and electric double layer capacitors. The electrodes manufactured by the electrode manufacturing facility 10 are such that an active material layer containing electrode active material particles is formed on a sheet-shaped substrate material serving as a current collector. A method of manufacturing an electrode sheet includes the step of preparing a mixture slurry containing electrode active material particles for a battery electrode, the step of coating a substrate material with the mixture slurry (coating step), and the step of drying the coated mixture slurry (drying step).

The mixture slurry containing a battery electrode active material includes, for example, electrode active material particles, a binder, and the like that are contained in a solvent. The mixture slurry is also referred to as a mixture paste. The step of coating a substrate material with a mixture slurry involves coating the prepared mixture slurry onto a sheet-shaped substrate material. The electrode sheet substrate material may use a metal foil, such as aluminum foil or copper foil. Herein, the electrode sheet substrate material is prepared in the form of, for example, a strip-shaped sheet. In the step of applying a mixture slurry onto a substrate material, the mixture slurry is supplied through a die or the like onto an electrode sheet conveyed in a roll-to-roll process. In the step of drying the applied mixture slurry, an active material layer containing electrode active material particles is formed on the electrode sheet by drying the applied mixture slurry. In the drying step, the electrode sheet is passed through a drying furnace to dry the mixture slurry applied on the electrode sheet. The active material layer that has undergone the drying step is adjusted to have predetermined thickness and density through a pressing step and the like.

The mainstream of the positive electrode slurry for lithium-ion secondary batteries is one that uses an organic solvent. For the positive electrode slurry, for example, polyvinylidene difluoride (hereinafter referred to as PVdF) may be used as a binder for binding materials, and an organic solvent such as N-methyl-2-pyrrolidone (hereinafter referred to as NMP) may be used as a solvent. On the other hand, the mainstream of the negative electrode slurry for lithium-ion secondary batteries is a slurry that uses styrenebutadiene rubber (hereinafter SBR), which is an aqueous dispersion binder, and water as a solvent. It should be noted that the materials used for the positive electrode slurry and the negative electrode slurry are not limited to the materials exemplified herein, unless specifically stated otherwise.

The mixture slurry applied in the coating step contains a required amount of solvent. In the step of drying the applied mixture slurry, it is necessary to cause such a solvent to evaporate. This means that, in the mass production of lithium-ion secondary batteries, a large amount of heat is required in the drying step in the manufacturing of electrode sheets. Moreover, in cases where an organic solvent is used, the organic solvent is contained in an exhaust gas in the drying step. For this reason, it is necessary to collect the organic solvent.

As illustrated in Fig. 1, the electrode manufacturing facility 10 includes a dryer 11, a first pipe 12, a solvent collection device 13, an outside air inlet pipe 14, a heat exchanger 15, a second pipe 16, a heating device 20, and a controller 40.

### Dryer 11

The dryer 11 is a device that dries a sheet-shaped current collector coated with a mixture slurry in which electrode active material particles are dispersed in an organic solvent. In the embodiment shown in Fig. 1, the dryer includes a drying furnace 11a, a heater 11b, and a conveyor device 11c.

Herein, the drying furnace 11a may include a furnace chamber that is surrounded by a heat insulating material. Inside the drying furnace 11a, a dry atmosphere is formed in a closed space. The drying furnace 11a is provided with an inlet 11alinto which the current collector coated with the mixture slurry is introduced, and an outlet 11a2. Inside the drying furnace 11a, a predetermined conveyance passage is provided along which the current collector coated with the mixture slurry is to be conveyed. Inside the drying furnace 11a, a dry atmosphere is formed that is at a temperature at which the solvent contained in the mixture slurry can evaporate, for example, at higher than or equal to 100°C.

The heater 11b is, for example, a device that heats the air supplied through the outside air inlet pipe 14 and supplies the air into the drying furnace 11a. The heater 11b may be composed of, for example, an electric heater. That said, the heater 11b is not limited to an electric heater but may be a gas heater or the like. When the solvent uses NMP, the heater 11b heats up the air supplied through the outside air inlet pipe 14 to a predetermined temperature (for example, 115°C) and supplies the heated air to the drying furnace 11a.

The conveyor device 11c may be a device that conveys a sheet-shaped current collector coated with a mixture slurry. The current collector coated with the mixture slurry may be, for example, a strip-shaped sheet and may be conveyed along the predetermined conveyance passage inside the drying furnace 11a. The mixture slurry may be applied onto the current collector before the current collector enters the drying furnace 11a. In this embodiment, a coating device 11d for applying the mixture slurry onto the current collector is provided upstream of the inlet 11a1 of the drying furnace 11a in the current collector conveyance passage. Herein, the mixture slurry applied to the current collector may be a slurry in which electrode active material particles are dispersed in an organic solvent (for example, NMP).

### First Pipe 12

The first pipe 12 is a pipe that sends the exhaust gas expelled from the dryer 11 to the solvent collection device 13. Here, the exhaust gas expelled from the dryer 11 contains a solvent component. The organic solvent used as the solvent component, such as NMP, has a boiling point higher than water. Accordingly, the exhaust gas expelled from the dryer 11 has a temperature of, for example, about 100°C. As illustrated in Fig. 1, the first pipe 12 is arranged from the drying furnace 11a through the heat exchanger 15 to the solvent collection device 13. In the embodiment shown in Fig. 1, the first pipe 12 is equipped with a blower fan 12a. The exhaust gas expelled from the dryer 11 is forcibly sent to the solvent collection device 13 by the blower fan 12a. The blower fan 12a may be disposed in front of the solvent collection device 13, in the first pipe 12. The blower fan 12a is controlled together with a later-described blower fan 14a that is disposed in the outside air inlet pipe 14 so that the drying conditions in the dryer 11 can be optimized. The flow velocity of the exhaust gas sent from the dryer 11 to the solvent collection device 13 may be controlled by controlling the blower fan 12a. In order to ensure stability of the flow velocity, it is also possible to provide a blower fan in the middle of the first pipe 12 according the length of the pipe. The airflow volumes of the blower fans provided in the facility may be controlled in order to, for example, maintain the conditions in the drying furnace.

### Solvent Collection Device 13

The solvent collection device 13 is a wet-type collection device. In the embodiment shown in Fig. 1, water is supplied to the solvent collection device 13 through a water supply pipe 13a, and the solvent collection device 13 causes the organic solvent contained in the exhaust gas expelled from the dryer 11 to dissolve into water to collect the organic solvent. The organic solvent, such as NMP, easily dissolves into water. Therefore, when water is sprinkled in the exhaust gas expelled from the dryer 11, the organic solvent contained in the exhaust gas is absorbed by water and is collected efficiently.

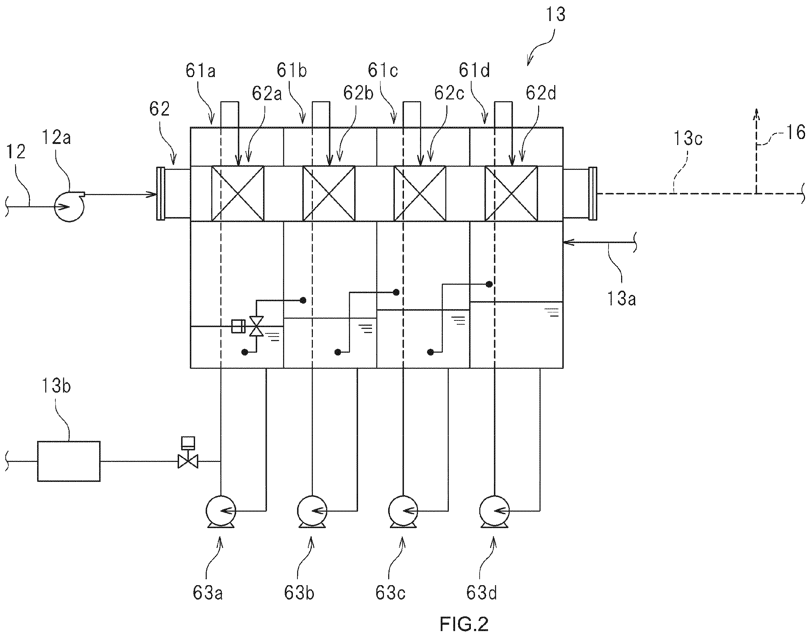

Fig. 2 is a schematic view of the solvent collection device 13. The solvent collection device 13 includes a plurality of collection tanks 61a to 61d that are separated from each other. A pipe 62 in which the exhaust gas expelled from the dryer 11 is flowed is passed in upper portions of the collection tanks 61a to 61d. The collection tanks 61a to 61d are lined up in that order from the inlet end of the pipe 62 toward the outlet end thereof. Mist eliminators 62a to 62d for separating organic solvent from the exhaust gas are filled in the pipe 62. The mist eliminators may be composed of, for example, a mesh material called a demister.

The water to be supplied to the solvent collection device 13 is supplied to each of the collection tanks 61a to 61d. The water to be supplied to the solvent collection device 13 may be, for example, pure water or the like such as to be adjusted to required water quality. The water is supplied so that the level of the water reserved in each of the collection tanks 61a to 61d reaches a predetermined water level. The water may be sprinkled on the mist eliminators 62a to 62d. The water reserved in the collection tanks 61a to 61d may be pumped up by pumps 63a to 63d so as to be sprinkled from the top of the collection tanks 61a to 61d. The water sprinkled from the top of the collection tanks 61a to 61d is retained in the mist eliminators 62a to 62d. The organic solvent contained in the exhaust gas expelled from the dryer 11 is absorbed by the water when the exhaust gas passes through the mist eliminators 62a to 62d.

The water that has absorbed the organic solvent is collected in the collection tanks 61a to 61d. The water collected in the collection tanks 61a to 61d is sent in sequence from the collection tank 61d that is near the outlet end toward the collection tank 61a that is near the inlet end. This means that the concentration of the organic solvent is higher toward the collection tank 61a that is near the inlet end. For example, each of the collection tanks 61a to 61d measures the concentration of the organic solvent in the water collected the respective collection tanks 61a to 61d, and when the concentration of the organic solvent reaches a predetermined concentration based on the measured values, a valve is opened to send the water to the next one of the collection tanks. The collection tank 61a that is near the inlet end has a higher concentration of organic solvent, and the water is discharged one after another from the solvent collection device 13.

The water that has absorbed the organic solvent may be distilled by a reprocessing facility 13b or the like, as illustrated in Fig. 1, so that it can be separated into organic solvent and water. The water separated from the organic solvent may be used again in the solvent collection device 13. The separated organic solvent may be refined again so that it can be reused. The exhaust gas after the organic solvent has been absorbed by water in the solvent collection device 13 is expelled through a pipe 13c. The pipe 13c in which the exhaust gas expelled from the solvent collection device 13 is flowed is connected to the second pipe 16, as will be described later. In the example shown in Fig. 1, the reprocessing facility 13b is provided within the factory. It is also possible that the reprocessing facility 13b may be provided outside the factory, for example. When this is the case, a reserve tank for reserving the water that has absorbed the organic solvent may be provided, and the water may be transported with a tank truck or the like to the reprocessing facility 13b outside the factory, where the organic solvent is reprocessed.

### Outside Air Inlet Pipe 14

The outside air inlet pipe 14 is a pipe that introduces outside air and sends it to the dryer 11. The outside air inlet pipe 14 is arranged so as to pass through the heat exchanger 15 and reach the dryer 11. The embodiment shown in Fig. 1 is configured so that a portion of the exhaust gas expelled from the solvent collection device 13 is supplied through the second pipe 16 to the outside air inlet pipe 14. The outside air inlet pipe 14 is provided with a blower fan 14a in front of the heat exchanger 15. Such a blower fan 14a enables outside air to be sent forcibly from the outside air inlet pipe 14 to the heat exchanger 15. The flow velocity of the outside air sent from the outside air inlet pipe 14 to the heat exchanger 15 may be controlled by controlling the blower fan 14a. In addition, the outside air inlet pipe 14 is also provided with a blower fan 14b in front of the dryer 11. The blower fan 14b enables outside air to be sent forcibly from the outside air inlet pipe 14 to the dryer 11. The flow velocity of the outside air sent from the outside air inlet pipe 14 to the dryer 11 may be controlled by controlling the blower fan 14b.

### Heat Exchanger 15

The heat exchanger 15 is configured to exchange heat between the first pipe 12 and the outside air inlet pipe 14. Such heat exchanger 15 enables exchange of heat between the exhaust gas expelled from the dryer 11, which flows through the first pipe 12, and the outside air that is introduced from the outside air inlet pipe 14. This allows the temperature of the outside air introduced to the dryer 11 to be raised in advance. In addition, the exhaust gas expelled from the dryer 11, which flows through the first pipe 12, is passed through the heat exchanger 15 and supplied to the solvent collection device 13. The heat exchanger 15 lowers the temperature of the exhaust gas expelled from the dryer 11. In the solvent collection device 13, the lower the temperature of the exhaust gas expelled from the dryer 11, the more easily the solvent contained in the exhaust gas condenses, so the more efficiently the organic solvent can be absorbed by water.

### Second Pipe 16

The second pipe 16 is connected to the pipe 13c in which the exhaust gas expelled from the solvent collection device 13 is flowed, and to a portion of the outside air inlet pipe 14 that is upstream of the heat exchanger 15. The second pipe 16 is a pipe that sends at least a portion of the exhaust gas after having passed through the solvent collection device 13 to the outside air inlet pipe 14. The second pipe 16 allows a portion of the exhaust gas after having passed through the solvent collection device 13 to be introduced into the outside air inlet pipe 14, then passed through the heat exchanger 15, and supplied to the dryer 11. Because the second pipe 16 allows a portion of the exhaust gas after having passed through the solvent collection device 13 to be introduced into the outside air inlet pipe 14, it is possible to stabilize the temperature of the air supplied to the heat exchanger 15.

Herein, the temperature of the outside air introduced into the outside air inlet pipe 14 is assumed to be an annual average of about 16°C. The temperature of the outdoor air introduced into the outdoor air inlet pipe 14 varies depending on the season and time of day. For example, the temperature of the outdoor air can be as high as about 35°C during daytime in summer. On the other hand, the temperature of the outdoor air can be as low as about -2°C during nighttime in winter. Thus, the outside air introduced into the outside air inlet pipe 14 is unstable throughout the year. On the other hand, the exhaust gas expelled from the dryer 11 is at about 100°C.

Although the temperature of the exhaust gas lowers in the solvent collection device 13 because the exhaust gas is mixed with the sprinkled water, the exhaust gas expelled from the solvent collection device 13 is kept at about 40°C, which is higher than the temperature of the outside air. Because a portion of the exhaust gas after having passed through the solvent collection device 13 is introduced into the outside air inlet pipe 14 through the second pipe 16, the temperature of the outside air that is introduced into the dryer 11 can be raised, so it is expected to reduce the amount of heat required for heating the outside air with the heater 11b of the dryer 11.

For example, it is assumed that, when the temperature of the outside air introduced into the outside air inlet pipe 14 is 16°C and the temperature of the exhaust gas expelled from the dryer 11 is 100°C, the exhaust gas from the solvent collection device 13 is not introduced from the second pipe 16 and the outside air is heat-exchanged with the heat exchanger 15 as it is. In this case, the temperature of the outside air having passed through the heat exchanger 15 may become about 41°C. This air needs to be turned to be hot air at about 115°C in the dryer 11, so the heater 11b of the dryer 11 requires a considerable amount of heat to heat the outside air.

In contrast, when the exhaust gas from the solvent collection device 13 is introduced from the second pipe 16 to the outside air introduced to the outside air inlet pipe 14, the temperature of the air supplied to the heat exchanger 15 can be raised to 29°C. Then, the temperature of the air can be raised to 51°C through the heat exchanger 15. This air needs to be turned to be hot air at about 115°C in the dryer 11. However, because the exhaust gas from the solvent collection device 13 is introduced from the second pipe 16 to the outside air introduced to the outside air inlet pipe 14, the temperature of the introduced air is higher by about 10°C. Thus, it is expected to reduce the amount of heat required for the heater 11b of the dryer 11 to heat the outside air.

As described above, outside air is introduced into the outside air inlet pipe 14, mixed in the outside air inlet pipe 14 with the exhaust gas after having passed through the solvent collection device 13 that is supplied from the second pipe 16, and further heat exchanged with the exhaust gas from the dryer 11 by the heat exchanger 15. This makes it possible to use the heat of the exhaust gas from the dryer 11 and to raise the temperature of the outside air to be introduced to the dryer 11 in advance. This lowers the energy required by the heater 11b of the dryer 11. Moreover, because the temperature of the exhaust gas expelled from the solvent collection device 13 is stable throughout the year, it is possible to stabilize the temperature of the outside air supplied by the outside air inlet pipe 14.

Herein, the exhaust gas after having passed through the solvent collection device 13 is highly humid. The electrode manufacturing facility 10 may further include a regulator valve 16a for regulating the flow rate of the second pipe 16. Because the second pipe 16 is provided with the regulator valve 16a, it is possible to regulate the exhaust gas after having passed through the solvent collection device 13 that is introduced to the outside air inlet pipe 14. This makes it possible to control the temperature and dew point of the gas that flows through the outside air inlet pipe 14.

For example, a controller 40 may be configured to detect at least one of the temperature and dew point of a gas flowing in the outside air inlet pipe 14 at a part of the second pipe 16 that is downstream of the outside air inlet pipe 14 and upstream of the heat exchanger 15, and execute a process of controlling the degree of opening of the regulator valve 16a based on the detected value. This makes it possible to regulate the amount of the exhaust gas introduced to the outside air inlet pipe 14 through the second pipe 16 while feeding back at least one of the temperature and dew point of the gas flowing in the outside air inlet pipe 14.

The controller 40 may be configured to detect the temperature or dew point of the gas flowing in the outside air inlet pipe 14 with a sensor 14c provided in the outside air inlet pipe 14 after the exhaust gas after having passed through the solvent collection device 13 has been introduced through the second pipe 16, and to regulate the degree of opening of the regulator valve 16a provided in the second pipe 16. The amount of the exhaust gas to be introduced into the outside air inlet pipe 14 through the second pipe 16 may be regulated taking the temperature or dew point of the gas flowing in the outside air inlet pipe 14 into consideration.

Here, the gas flowing in the outside air inlet pipe 14 is sent to the dryer 11. The higher the temperature of the gas flowing in the outside air inlet pipe 14, the better, but the lower the humidity of the gas flowing in the outside air inlet pipe 14, the better. The exhaust gas introduced to the outside air inlet pipe 14 through the second pipe 16 has a high humidity. For this reason, the amount of the exhaust gas to be introduced into the outside air inlet pipe 14 through the second pipe 16 may be regulated taking the dew point of the gas flowing in the outside air inlet pipe 14 into consideration, in addition to the temperature thereof. It is more preferable that the regulator valve 16a for regulating the flow rate of the second pipe 16 be controlled based on the temperature and the dew point of the gas flowing in the outside air inlet pipe 14.

For example, when the dew point of the gas flowing in the outside air inlet pipe 14 is lower than a predetermined dew point, the degree of opening of the regulator valve 16a may be adjusted so as to increase the amount of the exhaust gas to be introduced into the outside air inlet pipe 14 through the second pipe 16. When the dew point of the gas flowing in the outside air inlet pipe 14 is higher than a predetermined dew point, the degree of opening of the regulator valve 16a may be adjusted so as to decrease the amount of the exhaust gas to be introduced into the outside air inlet pipe 14 through the second pipe 16. It is also possible that when the dew point of the gas flowing in the outside air inlet pipe 14 becomes higher than a predetermined dew point, the regulator valve 16a may be adjusted to be closed.

It is also possible that when the temperature of the gas flowing in the outside air inlet pipe 14 is lower than a predetermined temperature, the degree of opening of the regulator valve 16a may be adjusted so as to increase the amount of the exhaust gas to be introduced into the outside air inlet pipe 14 through the second pipe 16. When the temperature of the gas flowing in the outside air inlet pipe 14 is higher than a predetermined temperature, the degree of opening of the regulator valve 16a may be adjusted so as to decrease the amount of the exhaust gas to be introduced into the outside air inlet pipe 14 through the second pipe 16. It is also possible that when the temperature of the gas flowing in the outside air inlet pipe 14 becomes higher than a predetermined temperature, the regulator valve 16a may be adjusted to be closed.

The controller 40 may be configured to detect the concentration of the organic solvent contained in the exhaust gas flowing in the second pipe 16 at a part of the second pipe 16 that is downstream of the outside air inlet pipe 14 and upstream of the heat exchanger 15, and execute a process of controlling the degree of opening of the regulator valve 16a based on the concentration of the organic solvent that has been detected. This makes it possible to adjust the amount of the exhaust gas to be introduced into the outside air inlet pipe 14 through the second pipe 16 while monitoring the concentration of the organic solvent in the outside air inlet pipe 14.

The controller 40 may be configured to detect the concentration of the organic solvent in the gas flowing in the outside air inlet pipe 14 with the sensor 14c provided in the outside air inlet pipe 14 after the exhaust gas after having passed through the solvent collection device 13 has been introduced through the second pipe 16, and to regulate the degree of opening of the regulator valve 16a provided in the second pipe 16. Here, when the concentration of the organic solvent exceeds a predetermined concentration in the outside air introduced into the dryer 11, the drying of the mixture slurry in the dryer 11 is slowed down. The concentration of the organic solvent in the outside air to be introduced into the dryer 11 may be restricted to such a level as not to slow down the drying of the mixture slurry in the dryer 11. In addition, because the organic solvent is in many cases a hazardous material, it is also possible that the regulator valve 16a provided in the second pipe 16 may be shut off when the concentration exceeds a predetermined concentration from the viewpoint of safety.

Thus, the degree of opening of the regulator valve 16a provided in the second pipe 16 may be configured to be adjusted based on the concentration of the organic solvent and at least one of the temperature and dew point of the gas flowing in the outside air inlet pipe 14, after the exhaust gas after having passed through the solvent collection device 13 is introduced through the second pipe 16. This makes it possible to control the temperature, the dew point, and the organic solvent concentration of the outside air that is introduced into the dryer 11 through the outside air inlet pipe 14. For example, the regulator valve 16a provided in the second pipe 16 may be controlled in such a manner that the degree of opening of the regulator valve 16a is adjusted based on at least one of the temperature and dew point and the regulator valve 16a is closed when the concentration of the organic solvent exceeds a predetermined concentration. It is also possible that the regulating valve 16a may be controlled with two factors, temperature and dew point. For example, it is also possible that while the degree of opening of the regulator valve 16a is controlled based on the temperature, the degree of opening of the regulator valve 16a may be prevented from increasing when the dew point exceeds a certain value. This can prevent the degree of opening of the regulator valve 16a from increasing, for example, when the dew point exceeds a certain value even in the case where the temperature of the gas flowing in the outside air inlet pipe 14 is lower than a predetermined value because of temperature control after the exhaust gas after having passed through the solvent collection device 13 is introduced through the second pipe 16. This can prevent the dew point of the gas flowing in the outside air inlet pipe 14 from increasing above a certain value. Thus, the degree of opening of the regulator valve 16a and the like may be controlled so that the quality of the gas flowing in the outside air inlet pipe 14 that is measured with the sensor 14c can be adjusted to predetermined quality.

### Heating Device 20

In the embodiment shown in Fig. 1, the outside air inlet pipe 14 further includes a heating device 20. The heating device 20 is disposed at a portion of the outside air inlet pipe 14, which sends the outside air to the dryer 11, that is downstream of the heat exchanger 15. The heating device 20 is a device that heats up the gas sent to the dryer 11 through the outside air inlet pipe 14 at the portion downstream of the heat exchanger 15. In this embodiment, the heating device 20 includes a heat pump 21 and a heat exchange coil 22. The heat exchange coil 22 is disposed in the middle of the outside air inlet pipe 14, and may be a plate type heat exchanger or the like that has sufficient capability of raising the temperature of the outside air inlet pipe 14 to higher than a certain value. The heat pump 21 may be a hot water heat pump unit. The hot water heat pump unit is, for example, a heat pump unit equipped with a heat transfer medium circulation system including a heat absorbing part and a heat dissipating part. The hot water heat pump unit receives heat from a water heat source or an air heat source outside the system by the heat absorbing part and dissipates the heat to a heat transfer system that circulates between the heat pump 21 and the heat exchange coil 22 from the heat dissipating part. This makes it possible to supply required hot water to the heat exchange coil 22.

The heat exchange coil 22 is supplied with hot water, for example, at about 90°C from the heat pump 21 to heat the gas flowing in the outside air inlet pipe 14. Then, the outside air heated by the heat exchange coil 22 is supplied to the dryer 11. When the temperature of the gas flowing in the outside air inlet pipe 14 that is expelled from the heat exchanger 15 is about 51°C, the temperature of the outside air supplied to the dryer 11 can be raised to about 80°C by heating the gas flowing in the outside air inlet pipe 14 through the heating device 20. The heat pump 21 is able to utilize a large amount of heat energy with a small amount of input energy. Thus, the heating device 20 enables the outside air to be further heated and thereafter supplied to the device, so it is possible to significantly reduce the energy required by the heater 11b of the dryer 11.

For example, the electrode manufacturing facility 10 may be configured to detect the temperature of the gas flowing in the outside air inlet pipe 14 with a sensor 23 provided downstream of the heating device 20 and to control the degree of opening of a regulator valve 24 provided in the heat pump 21. By controlling the degree of opening of the regulator valve 24 based on the temperature of the gas flowing in the outside air inlet pipe 14, the amount of heat transfer medium circulating in the heat pump 21 is controlled so that the gas flowing in the outside air inlet pipe 14 can be heated to a stable temperature. The amount of heat exchanged with the gas flowing in the outside air inlet pipe 14 may be adjusted in the heat exchange coil 22 in this way. This makes it possible to adjust the temperature of the outside air supplied to the dryer 11. In addition, the heat pump 21 is able to cool other heat transfer media. For example, the heat pump 21 may use water as the heat transfer medium. The use of water as the heat transfer medium makes it possible to obtain cold water at about 10°C, so that it is possible to obtain, as by-products, cooling water for air conditioning or for machines that needs to consume energy to be cooled in external facilities. This provides advantageous effects of further energy reduction.

An example of the heating device 20 herein illustrates an embodiment in which a heat pump and a heat exchange coil that can heat the gas flowing in the outside air inlet pipe 14 efficiently are used. It is sufficient that the heating device 20 may be, but is not limited to, a device that heats up the gas sent to the dryer 11 through the outside air inlet pipe 14 at a location downstream of the heat exchanger 15.

Thus, by introducing the exhaust gas from the solvent collection device 13 into the outside air inlet pipe 14, it is possible to raise the temperature of the outside air to be introduced into the dryer 11 through the outside air inlet pipe 14. This serves to reduce the energy required by the heater 11b of the dryer 11. Moreover, the energy required by the heater 11b of the dryer 11 is reduced significantly by heating the outside air supplied to the dryer 11 through the heat exchanger 15 by the heating device 20. From the viewpoint of reducing the energy required by the heater 11b of the dryer 11, merely introducing the exhaust gas from the solvent collection device 13 into the outside air inlet pipe 14 and merely heating the gas with the heating device 20 are both effective. The capacity required for the heating device 20 can be further reduced by introducing the exhaust gas from the solvent collection device 13 into the outside air inlet pipe 14 through the second pipe 16, moreover heating the gas through the heat exchanger 15, and further heating the gas with the heating device 20. This makes it possible to reduce the size of the heating device 20, and also reduces equipment costs and running costs.

Here, a method of manufacturing an electrode includes a drying step and a solvent collecting step. The drying step is a step of drying a sheet-shaped current collector coated with a mixture slurry in which electrode active material particles are dispersed in an organic solvent. In the electrode manufacturing facility 10 described above, the drying step is implemented by the dryer 11. The solvent collecting step is a step of collecting the organic solvent by spraying water to an exhaust gas produced in the drying step and causing the organic solvent contained in the exhaust gas to dissolve into the water. In the electrode manufacturing facility 10 described above, the solvent collecting step is implemented by the solvent collection device 13. In the drying step, a portion of the exhaust gas after having been sprayed water in the solvent collecting step may be mixed with outside air, heat-exchanged with the exhaust gas produced in the drying step, and thereafter introduced into the dryer 11. This raises the temperature of the outside air introduced to the dryer 11. This makes it possible to lower the energy required by the heater 11b of the dryer 11.

The amount of a portion of the exhaust gas sprayed with water that is mixed with the outside air in the solvent collecting step may be adjusted based on the dew point of the gas after having been mixed. Alternatively, the amount of a portion of the exhaust gas sprayed with water that is mixed with the outside air in the solvent collecting step may be adjusted based on the concentration of the organic solvent in the gas after having been mixed. The amount of a portion of the exhaust gas sprayed with water that is mixed with the outside air in the solvent collecting step may be adjusted based on the dew point of the gas after having been mixed and the concentration of the organic solvent in the gas after having been mixed. For example, the amount of a portion of the exhaust gas sprayed with water that is mixed with the outside air in the solvent collecting step may be adjusted based on the temperature of the gas after having been mixed. The amount of a portion of the exhaust gas sprayed with water that is mixed with the outside air in the solvent collecting step may be adjusted based on the temperature of the gas after having been mixed and the concentration of the organic solvent in the gas after having been mixed. The amount of a portion of the exhaust gas sprayed with water that is mixed with the outside air in the solvent collecting step may be adjusted based on the temperature, dew point, and organic solvent concentration of the gas after having been mixed.

The method of manufacturing electrodes may involve heat-exchanging of the outside air with the exhaust gas produced in the drying step, further heating the outside air, and introducing the outside air into the dryer. This makes it possible to lower the energy required by the heater 11b of the dryer 11. For example, in the drying step, it is also possible that a gas in which outside air is mixed with a portion of the exhaust gas after having been sprayed with water in the solvent collecting step may be heat-exchanged with the exhaust gas produced in the drying step, thereafter further heated, and then introduced into the dryer. This significantly lowers the energy required by the heater 11b of the dryer 11.

Various embodiments of the invention have been described hereinabove according to the present disclosure. Unless specifically stated otherwise, the embodiments described herein do not limit the scope of the present invention. It should be noted that various other modifications and alterations may be possible in the embodiments of the invention disclosed herein. In addition, the features, structures, or steps described herein may be omitted as appropriate, or may be combined in any suitable combinations, unless specifically stated otherwise.

## Claims

1. An electrode manufacturing facility (10) comprising:
a dryer (11);
a solvent collection device (13) causing an organic solvent contained in an exhaust gas expelled from the dryer (11) to dissolve into water to collect the organic solvent;
a first pipe (12) for sending the exhaust gas expelled from the dryer to the solvent collection device (13);
an outside air inlet pipe (14) for introducing outside air and sending the air to the dryer (11);
a heat exchanger (15) configured to exchange heat between the first pipe (12) and the outside air inlet pipe (14); and
a second pipe (16), being connected to a pipe to which the exhaust gas after having passed through the solvent collection device (13) is expelled and to a portion of the outside air inlet pipe that is upstream of the heat exchanger (15), for sending at least a portion of the exhaust gas after having passed through the solvent collection device (13) to the outside air inlet pipe (14), wherein:
the dryer (11) includes:
a drying furnace (11a);
a heater (11b) for heating the air supplied through the outside air inlet pipe (14) and supplying the air into the drying furnace (11a); and
a conveyor device (11c) conveying a sheet-shaped current collector coated with a mixture slurry in which electrode active material particles are dispersed in an organic solvent, along a predetermined conveyance passage in the drying furnace (11a).

2. The electrode manufacturing facility (10) according to claim 1, further comprising a regulator valve regulating a flow rate of the second pipe.

3. The electrode manufacturing facility (10) according to claim 2, further comprising:
a controller (40), wherein;
the controller (40) is configured to:
detect at least one of a temperature and a dew point of a gas flowing in the outside air inlet pipe (14) at a location of the second pipe (16) that is downstream of the outside air inlet pipe (14) and upstream of the heat exchanger (15); and
execute a process of controlling a degree of opening of the regulator valve (16a) based on the at least one of the temperature and the dew point that have been detected.

4. The electrode manufacturing facility (10) according to claim 2, further comprising:
a controller (40), wherein;
the controller (40) is configured to:
detect a concentration of the organic solvent contained in the exhaust gas flowing in the second pipe at a location of the second pipe that is downstream of the outside air inlet pipe and upstream of the heat exchanger; and
execute a process of controlling a degree of opening of the regulator valve based on the concentration of the organic solvent that has been detected.

5. The electrode manufacturing facility (10) according to claim 2, further comprising:
a controller (40), wherein;
the controller (40) is configured to:
detect a concentration of the organic solvent in a gas flowing in the outside air inlet pipe (14) and at least one of a temperature and a dew point of the gas flowing in the outside air inlet pipe (14), at a location of the second pipe (16) that is downstream of the outside air inlet pipe (14) and upstream of the heat exchanger (15); and
execute a process of controlling a degree of opening of the regulator valve (16a) based on the concentration of the organic solvent that has been detected and at least one of the temperature and the dew point that have been detected.

6. The electrode manufacturing facility (10) according to any one of claims 1 to 5, wherein the outside air inlet pipe (14) further comprises a heating device (20) disposed downstream of the heat exchanger (15).

7. The electrode manufacturing facility (10) according to claim 6, wherein the heating device is a heat exchange coil (22) connected to a heat pump (21).

8. An electrode manufacturing facility (10) comprising:
a dryer (11);
a solvent collection device (13) causing an organic solvent contained in an exhaust gas expelled from the dryer (11) to dissolve into water to collect the organic solvent;
a first pipe (12) for sending the exhaust gas expelled from the dryer (11) to the solvent collection device (13);
an outside air inlet pipe (14) for introducing outside air and sending the air to the dryer (11); and
a heat exchanger (15) configured to exchange heat between the first pipe (12) and the outside air inlet pipe (14), wherein:
the dryer (11) includes:
a drying furnace (11a);
a heater (11b) for heating the air supplied through the outside air inlet pipe (14) and supplying the air into the drying furnace (11a); and
a conveyor device (11c) conveying a sheet-shaped current collector coated with a mixture slurry in which electrode active material particles are dispersed in an organic solvent, along a predetermined conveyance passage in the drying furnace (11), wherein
the outside air inlet pipe (14) includes a heating device (20) disposed downstream of the heat exchanger (15).

9. The electrode manufacturing facility (10) according to claim 8, wherein the heating device (20) is a heat exchange coil (22) connected to a heat pump (21).

10. A method of manufacturing an electrode comprising:
a drying step of drying a sheet-shaped current collector coated with a mixture slurry in which electrode active material particles are dispersed in an organic solvent; and
a solvent collecting step of collecting the organic solvent by spraying water to an exhaust gas produced in the drying step and causing the organic solvent contained in the exhaust gas to dissolve into the water, wherein:
in the drying step, a portion of the exhaust gas after having been sprayed water in the solvent collecting step is mixed with outside air, heat-exchanged with the exhaust gas produced in the drying step, and introduced into the dryer.

11. The method according to claim 10, wherein an amount of a portion of the exhaust gas after having been sprayed with water that is mixed with the outside air in the solvent collecting step is adjusted based on at least one of a temperature and a dew point of the gas after having been mixed.

12. The method according to claim 10, wherein an amount of a portion of the exhaust gas after having been sprayed with water that is mixed with the outside air in the solvent collecting step is adjusted based on a concentration of the organic solvent in the gas after having been mixed.

13. The method according to claim 10, wherein an amount of a portion of the exhaust gas after having been sprayed with water that is mixed with the outside air in the solvent collecting step is adjusted based on a concentration of the organic solvent in the gas after having been mixed and at least one of a temperature and a dew point of the gas after having been mixed.

14. The method according to any one of claims 10 to 13, wherein, in the step of drying, a gas in which outside air is mixed with a portion of the exhaust gas after having been sprayed with water in the solvent collecting step is heat-exchanged with the exhaust gas produced in the drying step, thereafter further heated, and then introduced into the dryer.

15. A method of manufacturing an electrode comprising:
a drying step of drying a sheet-shaped current collector coated with a mixture slurry in which electrode active material particles are dispersed in an organic solvent; and
a solvent collecting step of collecting the organic solvent by spraying water to an exhaust gas produced in the drying step and causing the organic solvent contained in the exhaust gas to dissolve into the water, wherein:
in the drying step, outside air is heat-exchanged with the exhaust gas produced in the drying step, further heated, and thereafter introduced into a dryer.

## Patentansprüche

1. Eine Elektrodenfertigungsanlage (10), umfassend:
einen Trockner (11);
eine Vorrichtung (13) zum Sammeln von Lösungsmittel, die bewirkt, dass ein organisches Lösungsmittel, das in einem Abgas enthalten ist, das aus dem Trockner (11) ausgestoßen wird, sich in Wasser löst, um das organische Lösungsmittel zu sammeln;
eine erste Leitung (12), um das Abgas, das aus dem Trockner ausgestoßen wird, zu der Vorrichtung (13) zum Sammeln von Lösungsmittel zu leiten;
eine Außenluft-Einlassleitung (14) zum Einleiten von Außenluft und zum Leiten der Luft zum Trockner (11);
einen Wärmetauscher (15), der so konfiguriert ist, dass er Wärme zwischen der ersten Leitung (12) und der Außenluft-Einlassleitung (14) austauscht; und
eine zweite Leitung (16), die mit einer Leitung, in die das Abgas nach Durchströmen der Lösungsmittelsammelvorrichtung (13) ausgestoßen wird, und mit einem Teil der Außenlufteinlassleitung, der sich stromaufwärts des Wärmetauschers (15) befindet, verbunden ist, um mindestens einen Teil des Abgases nach Durchströmen der Lösungsmittelsammelvorrichtung (13) in die Außenlufteinlassleitung (14) zu leiten, wobei:
der Trockner (11) umfasst:
einen Trockenofen (11a);
eine Heizeinrichtung (11b) zum Erwärmen der durch die Leitung (14) für die Außenluft zugeführten Luft und zum Zuführen der Luft in den Trockenofen (11a); und
eine Vorrichtung zum Fördern (11c), die einen blattförmigen Stromabnehmer, der mit einer Gemischaufschlämmung beschichtet ist, in der Partikel des aktiven Materials der Elektrode in einem organischen Lösungsmittel dispergiert sind, entlang eines vorbestimmten Durchlasses zum Fördern in dem Trockenofen (11a) fördert.

2. Die Elektrodenfertigungsanlage (10) nach Anspruch 1, ferner umfassend ein Regelventil, das eine Strömungsrate der zweiten Leitung regelt.

3. Die Elektrodenfertigungsanlage (10) nach Anspruch 2, ferner umfassend:
eine Steuervorrichtung (40), wobei
die Steuervorrichtung (40) so konfiguriert ist, dass sie:
mindestens eine von einer Temperatur und einem Taupunkt eines Gases erfasst, das in der Außenlufteinlassleitung (14) an einer Stelle der zweiten Leitung (16) strömt, die sich stromabwärts der Außenlufteinlassleitung (14) und stromaufwärts des Wärmetauschers (15) befindet; und
einen Prozess zur Steuerung des Öffnungsgrads des Regelventils (16a) auf der Grundlage der erfassten Temperatur und/oder des erfassten Taupunkts ausführt.

4. Elektrodenherstellungsanlage (10) nach Anspruch 2, ferner umfassend:
eine Steuervorrichtung (40), wobei
die Steuervorrichtung (40) so konfiguriert ist, dass sie:
eine Konzentration des organischen Lösungsmittels, das in dem Abgas enthalten ist, das in der zweiten Leitung strömt, an einer Stelle der zweiten Leitung, die sich stromabwärts von der Außenlufteinlassleitung und stromaufwärts von dem Wärmetauscher befindet, erfasst; und
einen Prozess zum Steuern eines Öffnungsgrads des Regelventils auf der Grundlage der Konzentration des organischen Lösungsmittels, die erfasst wurde, auszuführt.

5. Die Elektrodenherstellungsanlage (10) nach Anspruch 2, ferner umfassend:
eine Steuervorrichtung (40), wobei
die Steuervorrichtung (40) so konfiguriert ist, dass sie
eine Konzentration des organischen Lösungsmittels in einem Gas, das in der Außenlufteinlassleitung (14) strömt, und mindestens eine von einer Temperatur und einem Taupunkt des Gases, das in der Außenlufteinlassleitung (14) strömt, an einer Stelle der zweiten Leitung (16), die stromabwärts von der Außenlufteinlassleitung (14) und stromaufwärts von dem Wärmetauscher (15) ist, erfasst; und
einen Prozess zur Steuerung des Öffnungsgrads des Regelventils (16a) basierend auf der Konzentration des organischen Lösungsmittels, die erfasst wurde, und mindestens einem von der Temperatur und dem Taupunkt, die erfasst wurden, ausführt.

6. Elektrodenherstellungsanlage (10) nach einem der Ansprüche 1 bis 5, wobei die Leitung (14) für die Außenluft ferner eine stromabwärts des Wärmetauschers (15) angeordnete Vorrichtung (20) zum Erwärmen umfasst.

7. Elektrodenherstellungsanlage (10) nach Anspruch 6, wobei die Vorrichtung zum Erwärmen eine mit einer Wärmepumpe (21) verbundene Wärmetauscherspule (22) ist.

8. Eine Elektrodenherstellungsanlage (10), umfassend:
einen Trockner (11);
eine Vorrichtung (13) zum Sammeln von Lösungsmittel, die bewirkt, dass ein organisches Lösungsmittel, das in einem Abgas enthalten ist, das aus dem Trockner (11) ausgestoßen wird, sich in Wasser löst, um das organische Lösungsmittel zu sammeln;
eine erste Leitung (12), um das Abgas, das aus dem Trockner (11) ausgestoßen wird, zu der Vorrichtung (13) zum Sammeln von Lösungsmittel zu leiten;
eine Außenluft-Einlassleitung (14) zum Einleiten von Außenluft und zum Leiten der Luft zum Trockner (11); und
einen Wärmetauscher (15), der so konfiguriert ist, dass er Wärme zwischen der ersten Leitung (12) und der Außenluft-Einlassleitung (14) austauscht, wobei:
der Trockner (11) umfasst:
einen Trockenofen (11a);
eine Heizeinrichtung (11b) zum Erwärmen der durch die Leitung (14) für die Außenluft zugeführten Luft und zum Zuführen der Luft in den Trockenofen (11a); und
eine Fördervorrichtung (11c), die einen blattförmigen Stromabnehmer, der mit einer Gemischaufschlämmung beschichtet ist, in der Partikel aus aktivem Material der Elektrode in einem organischen Lösungsmittel dispergiert sind, entlang eines vorbestimmten Zuführdurchlasses in dem Trockenofen (11) fördert, wobei
die Leitung (14) für die Außenluft eine Vorrichtung (20) zum Erwärmen umfasst, die stromabwärts des Wärmetauschers (15) angeordnet ist.

9. Die Elektrodenfertigungsanlage (10) nach Anspruch 8, wobei die Vorrichtung (20) zum Erwärmen eine Wärmetauscherspule (22) ist, die mit einer Wärmepumpe (21) verbunden ist.

10. Verfahren zur Herstellung einer Elektrode, umfassend:
einen Trocknungsschritt zum Trocknen eines blattförmigen Stromabnehmers, der mit einer Mischungsaufschlämmung beschichtet ist, in der Partikel aus aktivem Material der Elektrode in einem organischen Lösungsmittel dispergiert sind; und
einen Lösungsmittelsammelschritt zum Sammeln des organischen Lösungsmittels durch Aufsprühen von Wasser auf ein im Trocknungsschritt erzeugtes Abgas und Veranlassen, dass sich das im Abgas enthaltene organische Lösungsmittel im Wasser löst, wobei:
in dem Trocknungsschritt ein Teil des Abgases, nachdem es in dem Lösungsmittel-Sammelschritt mit Wasser besprüht wurde, mit Außenluft gemischt wird, mit dem in dem Trocknungsschritt erzeugten Abgas einem Wärmeaustausch unterzogen wird und in den Trockner eingeführt wird.

11. Verfahren nach Anspruch 10, wobei eine Menge eines Teils des Abgases, nachdem es mit Wasser besprüht wurde, das mit der Außenluft in dem Lösungsmittelsammelschritt gemischt wird, auf der Grundlage von mindestens einer von einer Temperatur und einem Taupunkt des Gases nach dem Mischen eingestellt wird.

12. Verfahren nach Anspruch 10, wobei eine Menge eines Teils des Abgases, nachdem es mit Wasser besprüht wurde, das mit der Außenluft in dem Lösungsmittelsammelschritt gemischt wird, auf der Grundlage einer Konzentration des organischen Lösungsmittels in dem Gas, nachdem es gemischt wurde, eingestellt wird.

13. Verfahren nach Anspruch 10, wobei eine Menge eines Teils des Abgases, nachdem es mit Wasser besprüht wurde, das mit der Außenluft in dem Lösungsmittelsammelschritt gemischt wird, auf der Grundlage einer Konzentration des organischen Lösungsmittels in dem Gas, nachdem es gemischt wurde, und mindestens einer von einer Temperatur und einem Taupunkt des Gases, nachdem es gemischt wurde, eingestellt wird.

14. Verfahren nach einem der Ansprüche 10 bis 13, wobei in dem Trocknungsschritt ein Gas, in dem Außenluft mit einem Teil des Abgases gemischt wird, nachdem es in dem Lösungsmittel-Sammelschritt mit Wasser besprüht wurde, einem Wärmeaustausch mit dem in dem Trocknungsschritt erzeugten Abgas unterzogen wird, danach weiter erwärmt wird und dann in den Trockner eingeführt wird.

15. Verfahren zur Herstellung einer Elektrode, umfassend:
einen Trocknungsschritt zum Trocknen eines blattförmigen Stromabnehmers, der mit einer Mischungsaufschlämmung beschichtet ist, in der Partikel des aktiven Materials der Elektrode in einem organischen Lösungsmittel dispergiert sind; und
einen Lösungsmittel-Sammelschritt des Sammelns des organischen Lösungsmittels durch Aufsprühen von Wasser auf ein im Trocknungsschritt erzeugtes Abgas und Bewirken, dass sich das im Abgas enthaltene organische Lösungsmittel im Wasser löst, wobei:
im Trocknungsschritt Außenluft mit dem im Trocknungsschritt erzeugten Abgas in Wärmeaustausch gebracht, weiter erwärmt und danach in einen Trockner eingeführt wird.

## Revendications

1. Installation de fabrication d'électrodes (10) comprenant :
un séchoir (11) ;
un dispositif de collecte de solvant (13) provoquant la dissolution dans l'eau d'un solvant organique contenu dans un gaz d'échappement expulsé du séchoir (11) afin de collecter le solvant organique ;
un premier tuyau (12) pour envoyer le gaz d'échappement expulsé du séchoir vers le dispositif de collecte de solvant (13) ;
un tuyau d'entrée d'air extérieur (14) pour introduire l'air extérieur et l'envoyer au sécheur (11) ;
un échangeur de chaleur (15) configuré pour échanger de la chaleur entre le premier tuyau (12) et le tuyau d'entrée d'air extérieur (14) ; et
un second tuyau (16), relié à un tuyau vers lequel les gaz d'échappement sont expulsés après avoir traversé le dispositif de collecte de solvant (13) et à une partie du tuyau d'entrée d'air extérieur qui est en amont de l'échangeur de chaleur (15), pour envoyer au moins une partie des gaz d'échappement après avoir traversé le dispositif de collecte de solvant (13) vers le tuyau d'entrée d'air extérieur (14), dans laquelle :
le sécheur (11) comprend :
un four de séchage (11a) ;
un dispositif de chauffage (11b) pour chauffer l'air fourni par le tuyau d'entrée d'air extérieur (14) et fournir l'air dans le four de séchage (11a) ; et
un dispositif de transport (11c) transportant un collecteur de courant en forme de feuille recouvert d'un mélange de boue dans lequel les particules de matériau actif d'électrode sont dispersées dans un solvant organique, le long d'un passage de transport prédéterminé dans le four de séchage (11a).

2. L'installation de fabrication d'électrodes (10) selon la revendication 1, comprenant en outre une vanne de régulation régulant le débit du second tuyau.

3. L'installation de fabrication d'électrodes (10) selon la revendication 2, comprenant en outre :
un contrôleur (40), dans lequel ;
le contrôleur (40) est configuré pour :
détecter au moins une température et un point de rosée d'un gaz circulant dans le tuyau d'entrée d'air extérieur (14) à un endroit du second tuyau (16) qui est en aval du tuyau d'entrée d'air extérieur (14) et en amont de l'échangeur de chaleur (15) ; et
exécuter un processus de contrôle du degré d'ouverture de la vanne de régulation (16a) en fonction de l'un au moins de la température et du point de rosée qui ont été détectés.

4. L'installation de fabrication d'électrodes (10) selon la revendication 2, comprenant en outre :
un contrôleur (40), dans lequel ;
le contrôleur (40) est configuré pour :
détecter une concentration du solvant organique contenu dans le gaz d'échappement circulant dans le second tuyau à un endroit du second tuyau qui est en aval du tuyau d'entrée d'air extérieur et en amont de l'échangeur de chaleur ; et
exécuter un processus de contrôle du degré d'ouverture de la vanne de régulation en fonction de la concentration du solvant organique qui a été détectée.

5. L'installation de fabrication d'électrodes (10) selon la revendication 2, comprenant en outre :
un contrôleur (40), dans lequel ;
le contrôleur (40) est configuré pour :
détecter une concentration de solvant organique dans un gaz circulant dans le tuyau d'entrée d'air extérieur (14) et au moins l'un parmi une température et un point de rosée du gaz circulant dans le tuyau d'entrée d'air extérieur (14), à un endroit du second tuyau (16) qui est en aval du tuyau d'entrée d'air extérieur (14) et en amont de l'échangeur de chaleur (15) ; et
exécuter un processus de contrôle du degré d'ouverture de la vanne de régulation (16a) en fonction de la concentration du solvant organique qui a été détectée et d'au moins l'un des éléments suivants : la température et le point de rosée qui ont été détectés.

6. L'installation de fabrication d'électrodes (10) selon l'une des revendications 1 à 5, dans laquelle le tuyau d'entrée d'air extérieur (14) comprend en outre un dispositif de chauffage (20) disposé en aval de l'échangeur de chaleur (15).

7. L'installation de fabrication d'électrodes (10) selon la revendication 6, dans laquelle le dispositif de chauffage est un serpentin d'échange thermique (22) relié à une pompe à chaleur (21).

8. L'installation de fabrication d'électrodes (10) comprenant :
un séchoir (11) ;
un dispositif de collecte de solvant (13) provoquant la dissolution dans l'eau d'un solvant organique contenu dans un gaz d'échappement expulsé du séchoir (11) afin de collecter le solvant organique ;
un premier tuyau (12) pour envoyer le gaz d'échappement expulsé du séchoir (11) vers le dispositif de collecte de solvant (13) ;
un tuyau d'entrée d'air extérieur (14) pour introduire l'air extérieur et l'envoyer dans le séchoir (11) ; et
un échangeur de chaleur (15) configuré pour échanger de la chaleur entre le premier tuyau (12) et le tuyau d'entrée d'air extérieur (14), dans laquelle :
le séchoir (11) comprend :
un four de séchage (11a) ;
un dispositif de chauffage (11b) pour chauffer l'air fourni par le tuyau d'entrée d'air extérieur (14) et fournir l'air dans le four de séchage (11a) ; et
un dispositif de transport (11c) transportant un collecteur de courant en forme de feuille revêtu d'un mélange de boue dans lequel les particules de matériau actif d'électrode sont dispersées dans un solvant organique, le long d'un passage de transport prédéterminé dans le four de séchage (11), dans laquelle
le tuyau d'entrée d'air extérieur (14) comprend un dispositif de chauffage (20) disposé en aval de l'échangeur de chaleur (15).

9. L'installation de fabrication d'électrodes (10) selon la revendication 8, dans laquelle le dispositif de chauffage (20) est un serpentin d'échange thermique (22) relié à une pompe à chaleur (21).

10. Procédé de fabrication d'une électrode comprenant :
une étape de séchage d'un collecteur de courant en forme de feuille recouvert d'un mélange de boue dans lequel les particules de matériau actif d'électrode sont dispersées dans un solvant organique ; et
une étape de collecte du solvant consistant à collecter le solvant organique en pulvérisant de l'eau sur un gaz d'échappement produit lors de l'étape de séchage et en provoquant la dissolution du solvant organique contenu dans le gaz d'échappement dans l'eau, dans lequel :
dans l'étape de séchage, une partie du gaz d'échappement après avoir été aspergé d'eau dans l'étape de collecte du solvant est mélangée à l'air extérieur, échangée thermiquement avec le gaz d'échappement produit dans l'étape de séchage, et introduite dans le séchoir.

11. Le procédé selon la revendication 10, dans lequel une quantité d'une partie des gaz d'échappement après avoir été pulvérisés avec de l'eau qui est mélangée avec l'air extérieur dans l'étape de collecte des solvants est ajustée en fonction d'au moins une température et d'un point de rosée du gaz après avoir été mélangé.

12. Le procédé selon la revendication 10, dans lequel une quantité d'une partie des gaz d'échappement après avoir été pulvérisés avec de l'eau qui est mélangée avec l'air extérieur dans l'étape de collecte du solvant est ajustée en fonction d'une concentration du solvant organique dans le gaz après avoir été mélangé.

13. Le procédé selon la revendication 10, dans lequel une quantité d'une partie des gaz d'échappement après avoir été pulvérisés avec de l'eau qui est mélangée avec l'air extérieur dans l'étape de collecte du solvant est ajustée en fonction d'une concentration du solvant organique dans le gaz après avoir été mélangé et d'au moins une température et un point de rosée du gaz après avoir été mélangé.

14. Le procédé selon l'une des revendications 10 à 13, dans lequel, lors de l'étape de séchage, un gaz dans lequel l'air extérieur est mélangé à une partie des gaz d'échappement après avoir été pulvérisé avec de l'eau lors de l'étape de collecte des solvants est échangé thermiquement avec les gaz d'échappement produits lors de l'étape de séchage, puis chauffé davantage, et enfin introduit dans le séchoir.

15. Le procédé de fabrication d'une électrode comprenant :
une étape de séchage d'un collecteur de courant en forme de feuille recouvert d'un mélange de boue dans lequel les particules de matériau actif d'électrode sont dispersées dans un solvant organique ; et
une étape de collecte du solvant consistant à collecter le solvant organique en pulvérisant de l'eau sur un gaz d'échappement produit lors de l'étape de séchage et en provoquant la dissolution du solvant organique contenu dans le gaz d'échappement dans l'eau, dans lequel :
dans l'étape de séchage, l'air extérieur est échangé thermiquement avec le gaz d'échappement produit dans l'étape de séchage, chauffé davantage, puis introduit dans un séchoir.
